# EUROPÄISCHE PATENTSCHRIFT

(11) **EP 1 080 400 B1**
(45) Veröffentlichungstag und Bekanntmachung des Hinweises auf die Patenterteilung: **06.11.2002**
(21) Anmeldenummer: 99934500.2
(22) Anmeldetag: 14.05.1999
(51) Int. Cl.: G06F 1/00

(54) **VERFAHREN UND VORRICHTUNG ZUM VERARBEITEN VON DATEN**
METHOD AND DEVICE FOR PROCESSING DATA
PROCEDE ET DISPOSITIF POUR TRAITER DES DONNEES

(30) Priorität: 29.05.1998 DE 19824163; 29.06.1998 DE 19828936
(43) Veröffentlichungstag der Anmeldung: 07.03.2001
(73) Patentinhaber: Infineon Technologies AG, 81669 München (DE)
(72) Erfinder: SEDLAK, Holger, D-85658 Egmating (DE); SÖHNE, Peter, D-85244 Röhrmoos (DE); SMOLA, Michael, D-80636 München (DE); WALLSTAB, Stefan, D-81739 München (DE)
(74) Vertreter: Hermann, Uwe, Dipl.-Ing.
(86) Internationale Anmeldenummer: DE9901461
(87) Internationale Veröffentlichungsnummer: WO99063419

(56) Entgegenhaltungen:
- EP-A- 0 790 547
- DE-C- 19 523 466
- US-A- 4 932 053
- US-A- 5 404 402
- US-A- 5 533 123

## Beschreibung

Die Erfindung betrifft ein Verfahren bzw. eine Vorrichtung zum Verarbeiten von Daten. Im Rahmen üblicher Datenverarbeitung werden heutzutage zunehmend Sicherheitsaspekte relevant, da zunehmend versucht wird, unerlaubt Daten aus Datenverarbeitungsanlagen zu erhalten. Um die zu verhindern werden zunehmend kryptographische Verfahren angewandt, bei denen zu schützende Daten verschlüsselt werden. Hierzu wird unter anderem beispielsweise das "Public-Key-Verfahren" verwendet, bei dem jeder Teilnehmer eines Systems ein Schlüsselpaar besitzt, das aus einem geheimen Schlüsselteil und einem öffentlichen Schlüsselteil besteht. Die Sicherheit der Teilnehmer beruht nun darauf, daß der geheime Schlüsselteil Unbefugten nicht bekannt ist. Die Ausführung eines derartigen Verfahrens geschieht häufig in einer besonders gesicherten Komponente, wie beispielsweise einer Chipkarte aber auch in einem einmal in ein Gerät eingesetzten elektronischen Schaltkreis - auch als IC bekannt -, in denen dann das Verfahren selbst realisiert ist. Somit braucht der geheime Teil des Schlüssels diese gesicherte Komponente nicht zu verlassen.

Neuerdings sind jedoch Angriffe bekannt geworden, bei denen versucht wird, den Schlüssel in der gesicherten Komponente auszuspähen. Dies soll beispielsweise durch Messung des Stromverbrauchs der gesicherten Komponente ermöglicht werden. Durch das häufig wiederholte Beobachten des Stromverlaufs und bei dem Bekannt sein wie der Verschlüsselungsvorgang durchgeführt ist, ist es schließlich möglich, Rückschlüsse auf den Schlüssel zu ziehen.

Aus der US 4932053A ist ein Verfahren bekannt, bei dem durch einen Zufallsgenerator angesteuert Speicherzellen in Abhängigkeit der vom Zufallgenerator abgegebenen Daten betrieben werden. Da der Stromverbrauch der Speicherzellen von seiner Ansteuerung abhängig ist, ist der Stromverbrauch der Gesamtanordnung durch den zufällig verteilten Stromverbrauch der Speicherzellen insgesamt durch den Zufall bestimmt.

Der Erfindung liegt daher die Aufgabe zugrunde, ein Verfahren zum Verschlüsseln bzw. eine Vorrichtung vorzusehen, bei der eine erhöhte Sicherheit vor dem Ausspähen eines geheimen Schlusseilwortes gegeben ist.

Diese Aufgabe wird erfindungsgemäß mit den Maßnahmen bzw. Mitteln gemäß Patentanspruch 1 bzw. Patentanspruch 4 gelöst.

Dadurch, daß Verschlüsselungs- bzw. Entschlüsselungsverfahren so gesteuert bzw. Operationen begleitend zu diesem Verfahren gesteuert werden, daß sich auch bei einer häufig wiederholten Messung von von außen zugänglichen Parametern, wie beispielsweise dem Stromverbrauch, keine Rückschlüsse auf den verwendeten Schlüssel ziehen lassen.

Weitere vorteilhafte Ausgestaltungen der Erfindung sind in den Unteransprüchen angegeben. Nachfolgend wird die Erfindung unter Bezugnahme auf die Zeichnung anhand von Ausführungsbeispielen erläutert.

Hierbei zeigen:
- Fig. 1: ein erstes Ausführungsbeispiel einer erfindungsgemäßen Vorrichtung,
- Fig. 2: ein zweites Ausführungsbeispiel einer erfindungsgemäßen Vorrichtung, anhand der auch das erfindungsgemäße Verfahren erläutert wird und
- Fig. 3: ein drittes Ausführungsbeispiel

Mit 1, 2 ist eine zu schützende Schaltung, die beispielsweise aus einem Mikrocontroler 2 und einem Rechenwerk 1 besteht, bezeichnet. Der Mikrocontroler 2 steuert dabei das Rechenwerk 1, in dem beispielsweise ein Verschlüsselungsvorgang durchgeführt wird. Dieser zu schützenden Anordnung wird nunmehr ein Strom I zugeführt, der mittels einer Meßeinrichtung 7 detektierbar ist, wodurch Ruckschlüsse auf die Vorgänge in der zu schützenden Schaltung 1, 2 gezogen werden sollen. Es ist nunmehr eine zusätzliche Schaltungseinrichtung 6 vorgesehen, die über einen Zufallsgenerator 3 gesteuert wird. Dieser Zufallsgenerator kann beispielsweise als ein Sequenzgenerator in Form eines linear rückgekoppelten Schieberegisters ausgeführt sein, welches mit einem Startwert geladen, eine pseudozufällige Folge - Nullen und Einsen - erzeugt. Hierbei kann der Startwert entweder zufällig erzeugt sein oder von der Steuereinrichtung beispielsweise auf Basis des Schlüsselwortes generiert werden, auch ist eine Kombination beider Möglichkeiten denkbar. Die somit vom Zufallsgenerator erzeugte Sequenz steuert nunmehr Schalter S in der zusätzlichen Schaltungseinrichtung 6, so daß Kondensatoren, die mit den Schaltern S in Reihe liegen, entsprechend der jeweils gerade erzeugten Zufallsfolge geladen werden. Auf diese Weise wird der Stromverbrauch der zu schützenden Schaltung 1, 2 durch die zusätzliche Schaltungseinrichtung 6, nämlich dem Ladestrom der Kondensatoren, verschleiert. Um den Gesamtstromverbrauch dieser Einrichtung zu minimieren, ist es nicht notwendig, daß die zusätzliche Schaltungseinrichtung 6 fortwährend einen Beitrag zum Stromverbrauch liefert. Sie kann vielmehr darauf beschränkt werden, nur in der Zeit während des Verschlüsselns bzw. Entschlüsselns zu arbeiten.

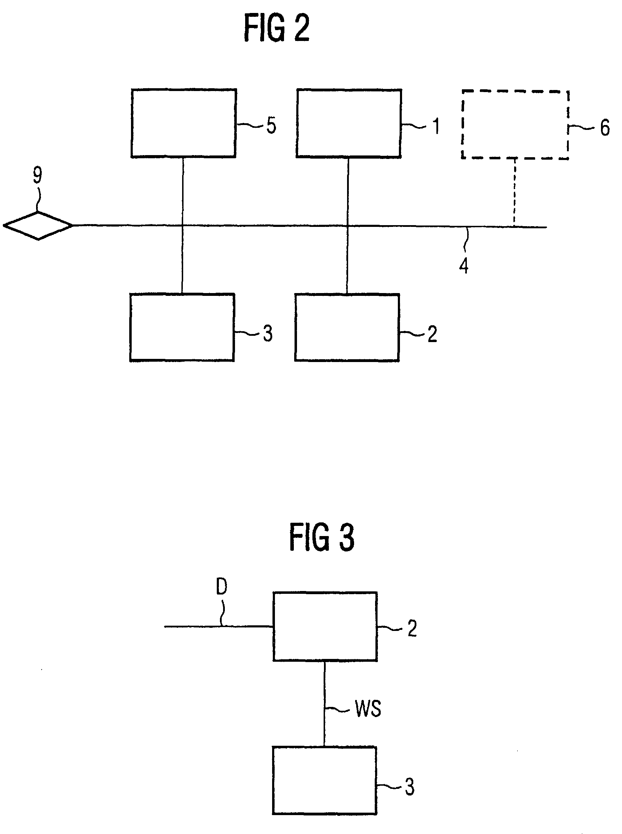

Fig. 2 zeigt ein weiteres erfindungsgemäßes Ausführungsbeispiel. Hierbei liegt das Rechenwerk 1 und die Steuerungseinrichtung 2, der Zufallsgenerator 3 und eine Speichereinrichtung 5 an einem gemeinsamen Bus 4, der von extern mittels einer Schnittstelle 9 zugänglich ist. Über die Schnittstelle 9 werden beispielsweise zu verschlüsselnde bzw. zu entschlüsselnde Daten zugeführt. In der Speichervorrichtung 5 ist ein geheimes Schlüsselwort gespeichert, das gesteuert von der Steuereinrichtung 2 dem Rechenwerk 1 zugeführt wird, um die über die Schnittstelle 9 vom Datenbus zugeführten Daten zu verschlüsseln bzw. zu entschlüsseln. Der Zufallsgenerator 3 erzeugt nunmehr eine Zufallszahl, die der Steuereinrichtung 2 zugeführt wird, die nunmehr auf Grundlage dieser Zufallszahl das Rechenwerk 1 steuert. Hierbei sind nunmehr zwei Möglichkeiten denkbar.

Das Rechenwerk 1 wird auf Grundlage der Zufallszahl durch die Steuereinrichtung 2 so gesteuert, daß der Verschlüsselungsoder Entschlüsselungsalgorithmus der jeweiligen Zufallszahl entsprechend moduliert wird. Das bedeutet, es erfolgen somit im Verschlüsselungs- bzw. Entschlüsselungsalgorithmus Rechenoperartionen, die ohne abschließende Auswirkung auf die Verschlüsselung bzw. Entschlüsselung, mit zufälligen Werten arbeiten.

Nachfolgend werden Beispiele für die Variationen des Verschlüsselungs- bzw. Entschlüsselungsalgorithmus beschrieben.

Ein bekanntes Verfahren ist das sogenannte RSA-Verfahren. Es arbeitet in der Gruppe teile fremder Restklassen modulo N und setzt die Exponentiationen aus Multiplikationen modulo N zusammen. Die Varianten dieser Protokolle für elliptische Kurven modulo p besitzen aus modularen Additionen und Multiplikationen zusammengesetzte Grundoperationen, sogenannte Additionen und Verdoppelungen in der Punktgruppe der elliptischen Kurven, die ihrerseits zur Exponentiation zusammengesetzt werden. Die dritte große Gruppe besteht aus elliptischen Kurven über endlichen Körpern, deren Elementezahlen eine Primzahlpotenz, die häufig eine Potenz von 2 ist. Diese Strukturen werden gemeinhin als GF(pⁿ) bezeichnet. Die Basisarithmetik in diesen Körpern kann durchgeführt werden, indem man die Körperelemente als Polynome mit Koeffizienten aus dem Grundkörper GF(p) oder einem geeigneten Zwischenkörper darstellt, die durch Multiplikationen modulo einem festen Körperpolynom miteinander verknüpft sowie koeffizientenweise addiert werden. In diesem Sinne lassen sich Operationen in GF(pⁿ) bzw. in elliptischen Kurven über diesen Körper als modulare Rechenoperation auffassen. Dabei sind die nachfolgenden drei, dem erfindungsgemäßen Verfahren entsprechende Variationsmöglichkeiten möglich.
a) Der Modul N wird durch r*N ersetzt, wobei r eine von 0 verschiedene Zufallszahl ist. Im GF(pⁿ)-Fall wird das Körperpolynom durch sein Produkt mit einem zufällig gewählten von 0 verschiedenen Polynom ersetzt. Dieser Schritt ist vor Eintritt in die Rechnung oder einem Teilschritt durchzuführen und nachfolgend durch eine Reduktion des Ergebnisses bzw. Teilergebnis modulo N zu kompensieren.
b) Ein Eingangsparameter X einer modularen Rechenoperation wird durch den Wert X + s*N ersetzt, wobei s eine Zufallszahl ist. Dies kann in verschiedenen Rechenschritten durchgeführt werden. Auch eine entsprechende Veränderung mehrerer Eingangsparameter der selben Operation ist möglich.
c) Die Exponenten E werden durch E + t*q ersetzt, wobei t eine Zufallszahl und q die sogenannte Ordnung der Basis der auszuführenden Exponentiation, oder ein geeignetes Vielfaches davon, ist. Potentielle Werte von q lassen sich häufig aus den Systemparametern ableiten. So kann man für die Exponentiation modulo N q=ϕ (N) und für elektrische Kurven q als die Anzahl der Punkte dieser Kurve wählen, wobei häufig noch bessere Wahlmöglichkeiten gegeben sind.

Eine weitere Möglichkeit besteht darin, daß alternative, gleichwertige Verschlüsselungs- bzw. Entschlüsselungsalgorithmen im Rechenwerk 1 durchführbar sind, die gemäß der zugeführten Zufallszahl zufällig ausgewählt werden.

Bei der zuvor beschriebenen Modulation des Verschlüsselungs- bzw. Entschlüsselungsalgorithmus wird nicht nur der Stromverbrauch der Anordnung durch die Zufallszahl verändert, sondern ebenfalls die benötigte Rechenzeit. Auch diese kann als Meßgröße Rückschlüsse auf den Geheimschlüssel geben. Gleiches gilt für die zufallsgesteuerte Auswahl der äquivalenten Rechenoperationen.

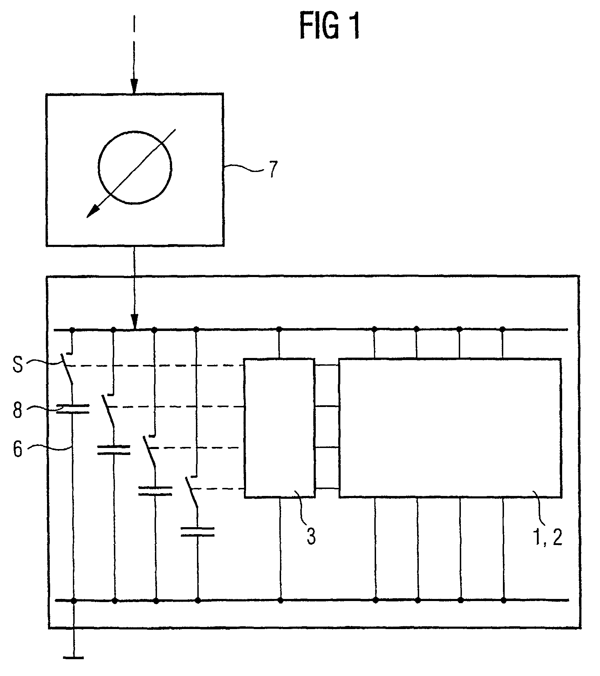

Eine dritte Möglichkeit ist darin zu sehen, daß ähnlich dem Ausführungsbeispiel nach Fig. 1 eine zusätzliche Schaltungseinheit 6 vorgesehen ist gestrichelt dargestellt), die ebenfalls mit der Zuführeinrichtung 4 verbunden ist. Die Steuereinrichtung 2 steuert nunmehr die zusätzliche Schaltungseinrichtung 6 gemäß einer vom Zufallsgenerator 3 über die Zuführeinrichtung 4 zugeführten Zufallszahl. Eine Anlayse des Stromverbrauchs der dargestellten Gesamtanordnung ist somit nicht durch den Betrieb im Rechenwerk 1 allein bestimmt sondern ebenfalls durch einen zufällig gesteuerten Stromverbrauch der zusätzlichen Schaltungseinheit.

Zusätzlich sei darauf hingewiesen, daß auch die Kombination von Modulation des jeweiligen Algorithmus mit einer zusätzlichen Schaltungseinheit 6 im "Dummy-Betrieb" sinnvoll ist.

Fig. 3 zeigt ein drittes erfindungsgemäßes Ausführungsbeispiel. Hierbei wird der Steuereinrichtung 2, in Form einer CPU über Datenanschluß D Daten zugeführt. Gleichzeitig wird der "Wait-State-Anschluß" WS mit einem Zufallsgenerator 3 verbunden. Dieser Zufallsgenerator 3 erzeugt nunmehr in zufälliger Folge "Einsen" "Nullen". Entsprechend der Programmierung wird nunmehr immer dann wenn eine "1" oder "0" am Eingang anliegt, der Betrieb der CPU gestoppt oder wieder aufgenommen. Dies führt dazu, daß der Betrieb der CPU zwar noch synchron zu einem nicht dargestellten Taktgenerator arbeitet, jedoch keine einheitlichen Verarbeitungszyklen mehr aufweist. Da auf diese Weise kein fester einheitlicher Rahmen mehr vorliegt, sind durch Beobachtung der CPU deren Arbeitsvorgänge nicht mehr ohne weiteres nachvollziehbar und nur sehr erschwert analysierbar. Dies bedeutet, daß die in der CPU abzuarbeitenden Vorgänge "verrauscht" sind. Um die Handhabbarkeit einer solchen Anordnung zu steigern, kann der Zufallsgenerator 3 so programmiert werden, daß festlegbar ist, in welchem zeitlichen Rahmen eine Verarbeitung maximal abläuft. Dies ist unter anderem dafür notwendig, um festzustellen, ob das System insgesamt ausgefallen ist.

Es erscheint besonders sinnvoll eine Anordnung gemäß Fig. 3 mit einer Anordnung gemäß Fig. 1 oder 2 oder mit beiden zu kombinieren um somit beispielsweise die Analyse der Bearbeitung eines Gesamtsystems zu erschweren.

## Patentansprüche

1. Datenverarbeitungsverfahren, bei dem in einer Verarbeitungseinheit (1,2) über eine Datenleitung zugeführte Daten verarbeitet werden, ein Zusatzsignal der Verarbeitungseinheit zugeführt wird,
bei dem die Verarbeitung in Abhängigkeit vom Zusatzsignal erfolgt,und
bei dem das Zusatzsignal von den zugeführten Daten und dem Betrieb der Verarbeitungseinheit unabhängig ist und durch einen Zufallsgenerator gesteuert ist.

2. Datenverarbeitungsverfahren nach Anspruch 1, bei dem an einer geeigneten Stelle ein Operand mit der Zufallszahl beaufschlagt ist und an einer weiteren geeigneten Stelle ein entsprechender Kompensationsoperand mit der gleichen Zufallszahl beaufschlagt ist.

3. Datenverarbeitungsverfahren nach Anspruch 1, bei dem die Verarbeitung der Daten aus mehreren Einzelschritten zusammengesetzt ist, die aus mehreren Alternativen gleichwertigen Einzelschritten ausgewählt sind, und/oder aus mehreren sequentiell abzuarbeitenden veränderbaren Einzelschritten besteht, wobei die Auswahl und/oder die Veränderungauf Grundlage des Zusatzsignals erfolgt.

4. Vorrichtung zum Durchführen des Verfahrens nach Anspruch 1, mit einer Recheneinrichtung (1), der Daten mittels einer Zuführvorrichtung (4) zugeführt werden, und einem Zufallsgenerator (3), und einer Steuervorrichtung (2), die die Recheneinrichtung steuert, wobei ein Ausgangssignal des Zufallsgenerators (3) die Steuereinrichtung (2) und/oder und die Recheneinrichtung (1) so beeinflußt, daß deren Betriebsablauf durch das Ausgangssignal des Zufallsgenerators bestimmt ist.

5. Vorrichtung nach Anspruch 4, bei der mit der Steuereinrichtung (2) eine Hilfsschaltung (6) verbunden ist, die von der Steuereinrichtung (2) auf Basis des von dem Zufallsgenerator (3) zugeführten Ausgangssignal gesteuert wird.

6. Vorrichtung nach Anspruch 5, bei der die Hilfsschaltung eine Kapazität aufweist, die gemäß dem Ausgangssignal des Zufallsgenerators umgeladen wird.

## Claims

1. Data processing method, in which, in a processing unit (1,2) data fed in via a data line are processed, an additional signal is fed to the processing unit, in which the processing is carried out in dependence on the additional signal, and in which the additional signal is independent of the data fed and the operation of the processing unit and is controlled by a random number generator.

2. Data processing method according to Claim 1, in which a random number is applied to an operand at a suitable position and the same random number is applied to a corresponding compensation operand at a further suitable position.

3. Data processing method according to Claim 1, in which the processing of the data is composed of a plurality of individual steps which are selected from a plurality of alternatives [sic] equivalent individual steps, and/or comprises a plurality of alterable individual steps to be processed sequentially, the selection and/or the processing being carried out on the basis of the additional signal.

4. Apparatus for carrying out the method according to Claim 1, having a computing device (1), to which data are fed by means of a feeding apparatus (4), and having a random number generator (3), and having a control apparatus (2), which controls the computing device, an output signal of the random number generator (3) influencing the control device (2) and/or and [sic] the computing device (1) such that the operating sequence thereof is determined by the output signal of the random number generator.

5. Apparatus according to Claim 4, in which an auxiliary circuit (6) is connected to the control device (2) and is controlled by the control device (2) on the basis of the output signal fed from the random number generator (3).

6. Apparatus according to Claim 5, in which the auxiliary circuit has a capacitance which is subjected to charge reversal in accordance with the output signal of the random number generator.

## Revendications

1. Procédé de traitement de données, dans lequel
on traite dans une unité de traitement de données (1, 2) des données envoyées par l'intermédiaire d'une ligne de données,
on envoie un signal supplémentaire à l'unité de traitement,
on effectue le traitement en fonction du signal supplémentaire, et
le signal supplémentaire dépend des données envoyées et du fonctionnement de l'unité de traitement et il est commandé par un générateur aléatoire.

2. Procédé de traitement de données selon la revendication 1, dans lequel, à un endroit approprié, un opérande reçoit le nombre aléatoire et, à un autre endroit approprié, un opérande de compensation correspondant reçoit le même nombre aléatoire.

3. Procédé de traitement de données selon la revendication 1, dans lequel le traitement des données est composé de plusieurs étapes individuelles, qui sont sélectionnées à partir de plusieurs variantes d'étapes individuelles équivalentes, et/ou de plusieurs étapes individuelles modifiables à traiter séquentiellement, la sélection et/ou la modification s'effectuant sur la base du signal supplémentaire.

4. Dispositif pour la mise en oeuvre du procédé selon la revendication 1, avec un dispositif de calcul (1) auquel des données sont envoyées au moyen d'un dispositif d'alimentation (4), avec un générateur aléatoire (3) et avec un dispositif de commande (2) qui commande le dispositif de calcul, un signal de sortie du générateur aléatoire (3) influençant le dispositif de commande (2) et/ou le dispositif de calcul (1) de telle sorte que le déroulement de l'exécution est déterminé par le signal de sortie du générateur aléatoire.

5. Dispositif selon la revendication 4, dans lequel le dispositif de commande (2) est relié à un circuit auxiliaire (6) qui est commandé par le dispositif de commande (2) sur la base du signal de sortie envoyé par le générateur aléatoire (3).

6. Dispositif selon la revendication 5, dans lequel le circuit auxiliaire comporte une capacité qui est chargée selon le signal de sortie du générateur aléatoire.
